(19) Europäisches Patentamt
European Patent Office
Office européen des brevets

(11) Publication number : **0 463 830 A2**

# (12) EUROPEAN PATENT APPLICATION

(21) Application number : **91305664.4**

(22) Date of filing : **21.06.91**

(51) Int. Cl.[5] : **C08L 67/02,** // (C08L67/02, 67:03), (C08L67/02, 71:00), (C08L67/02, 81:06)

(30) Priority : **22.06.90 JP 164428/90**

(43) Date of publication of application :
**02.01.92 Bulletin 92/01**

(84) Designated Contracting States :
**DE FR GB IT**

(71) Applicant : **POLYPLASTICS CO. LTD.**
**3-13, Azuchicho, 2-chome**
**Chuo-Ku Osaka-shi Osaka 541 (JP)**

(72) Inventor : **Kanaka, Keiichi**
**26-2, Gokanjima**
**Fuji-shi, Shizuoka (JP)**
Inventor : **Hijikata, Kenji**
**8-8, Fujimidai**
**Mishima-shi, Shizuoka (JP)**

(74) Representative : **Jackson, Peter et al**
**HYDE, HEIDE & O'DONNELL 10-12 Priests Bridge**
**London SW15 5JE (GB)**

(54) **Melt-stable polyester resin moulding compositions and moulded articles thereof.**

(57) A heat-stable polyester resin molding composition comprising :
(A) between 95 and 99.99% by weight of a crystalline thermoplastic polyester resin which is the reaction product of an aromatic dicarboxylic acid or its ester-forming derivative and an aliphatic dihydroxy compound having 2 to 8 carbon atoms, and
(B) 0.01% to 5% by weight of phenolic resin mainly comprised of a phenoxy skeleton having repeating units represented by the following general formula (I) :

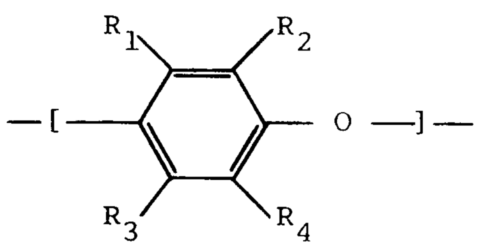

(I)

wherein $R_1$ to $R_4$, which may be the same or different, are each a hydrogen atom, an alkyl group or a halogen atom.

EP 0 463 830 A2

The present invention generally relates to moldable resin compositions exhibiting exceptionally high heat stability when melted. More particularly, the invention is embodied in novel polyester resin molding compositions which are exceptionally stable when melt-molded in an oxygen environment (e.g. extrusion molding) such that little (if any) mold deposits are formed due to resin decomposition. As a result, high-quality molded articles such as films or sheets which have an excellent surface appearance may be produced by molding the compositions of this invention.

Crystalline thermoplastic polyester resins such as polyalkylene terephthalate resins have been used extensively as an engineering plastic in various fields owing to their excellent mechanical and electrical properties, as well as their physical and chemical characteristics and good processability. Thus, thermoplastic polyester resins have been used to form molded parts including automotive, electrical and electronic applications.

Diversifying the end-use applications for thermoplastic polyester resins, however, often requires specific performance and/or property characteristics. For example, one problem which has prevented thermoplastic resins from being used in a greater number of end-use applications is the propensity for thermal decomposition products (e.g. terephthalic acid) generated during molding to "bleed" from the resin. These decomposition products, which are solid at normal temperatures are thus deposited on the molding apparatus resulting in the deterioration of the surface appearance of a resulting molded article. The present increased demand for a polyester resin and the greater range of its end-use applications make the problem associated with surface appearance increasingly more important from a material selection point of view. Undesirable surface defects may therefore preclude thermoplastic polyester resins from being employed in specific areas of use, especially films and sheets.

For example, when an ordinary polyethylene terephthalate (PET) or polybutylene terephthalate (PBT) is melt-molded into a film in an oxygen atmosphere by, for example, a process which comprises melt-extruding the resin through a slit and then cooling the extrudate with a chilled roll or a guide bar to give a solid film, solid decomposition products will gradually deposit on the various components in contact with the resin, for example, the slit die, chilled roll and/or guide. These deposits roughen the surface of the formed film thereby lowering the films surface gloss. In order to avoid lower film surface gloss, the die, chilled roll and/or guide bar must be cleaned frequently. The cleaning is a complicated operation resulting in production downtime and concomitant economical losses.

Low molecular weight additives, such as various antioxidants or catalyst deactivators, have conventionally been added to thermoplastic polyester resins in order to solve the thermal decomposition problems mentioned above. However, polyester resins containing such an additive will, in many cases, exhibit other problems, such as the bleed out of the additive itself and/or a decrease in the surface gloss of molded articles due to the presence of the additive, even thought the heat stability of the resin is improved. Therefore, the development of a more effective means for solving the problems noted above has been needed. It is towards fulfilling such a need that the present invention is directed.

It has now been found that a thermally stable, high-quality aromatic polyester resin composition which does not experience bleed out of thermal decomposition products during melt-molding in an oxygen atmosphere (such as melt extrusion) can unexpectedly be obtained by the addition of a very small amount of a specific phenolic resin. The resin compositions can be molded, for example by extrusion, into films or sheets having good surface appearance without depositing during molding any substance which is solid at ordinary temperatures (e.g. about 20°C).

The present invention relates more specifically to polyester resin molding compositions which include a blend of

(A) between 95 to 99.99% by weight of a crystalline thermoplastic polyester resin mainly made from an aromatic dicarboxylic acid or its ester-forming derivative and an aliphatic dihydroxy compound having 2 to 8 carbon atoms, and

(B) 0.01% to 5% by weight of phenolic resin mainly comprised of repeating units represented by the following general formula (I):

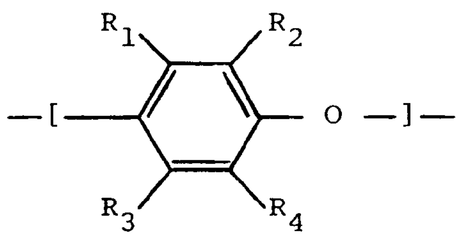

(I)

wherein $R_1$ to $R_4$, which may be the same or different, are each a hydrogen atom, an alkyl group or a halogen atom.

The resin compositions of this invention exhibit exceptionally high heat stability. As a result, the compositions of this invention have little (if any) decomposition products causing mold deposits. Thus, high-quality molded articles (especially extrusion molded articles) may be formed from such compositions.

The crystalline thermoplastic polyester resin (A) that may be used in the polyblends of the present invention is preferably a crystalline polyester prepared by the polycondensation mainly of an aromatic dicarboxylic acid with an aliphatic dihydroxy compound having 2 to 8 carbon atoms. The polyester may be either a homopolyester or a copolyester, either of which is capable of exhibiting the beneficial effects of the present invention.

Examples of the aromatic dicarboxylic acid to be used in the preparation of the polyester resin include terephthalic, isophthalic, naphthalenedicarboxylic and diphenyldicarboxylic acids and ester-forming derivatives thereof. These may be used either alone or as a mixture of two or more of them. Examples of the ester-forming derivatives include dialkyl esters, diphenyl esters and other diacylation products of the above acids, which may be also used in mixtures of two or more.

Examples of the aliphatic dihydroxy compound having 2 to 8 carbon atoms employed to form the crystalline thermoplastic polyester resin according to the present invention include the use of one or more aliphatic dihydroxy compounds such as ethylene glycol, hexanediol, diethylene glycol and triethylene glycol and substituted derivatives thereof.

The polyester resin according to the present invention may be branched or crosslinked and may be prepared by the additional use of a trifunctional monomer, such as trimellitic, trimesic or pyromellitic acid, pentaerythritol or trimethylolpropane.

The phenolic resin used in the compositions of the present invention is a resin having a phenoxy skeleton composed mainly of repeating units represented by the following general formula (I):

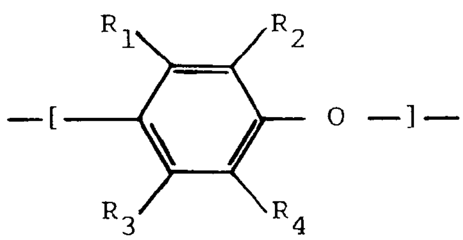

(I)

wherein $R_1$ to $R_4$, which may be the same or different, are each a hydrogen atom, an alkyl group or a halogen atom.

The phenoxy skeleton may additionally contain divalent organic groups X and/or Y at positions as indicated in the following general formula (Ia):

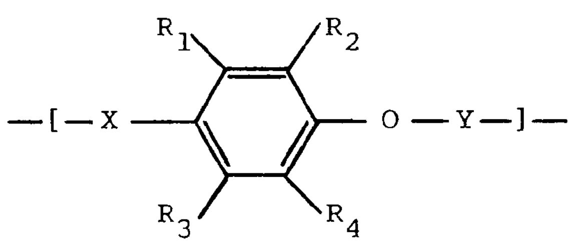

(Ia)

The X group in the phenoxy skeleton, when present, includes oxy and oxyarylene groups, specific examples of which include 4-oxyphenylene, 4-oxyphenylenemethylene, 4-oxyphenyleneethylidene and 2-(4-oxyphenylene)propylidene groups and substituted derivatives thereof.

The Y group in the phenoxy skeleton, when present, is preferably a divalent organic group, such as arylenedicarbonyl, bisarylene sulphone, arylene sulphone, bisarylenecarbonyl, oxalyl or hydroxyalkylene group. The arylenedicarbonyl group includes phthaloyl groups such as terephthaloyl and isophthaloyl groups such as 2,6-naphthalenedicarbonyl, 2,7-naphthalenedicarbonyl, 1,4-naphthalenedicarbonyl, 4,4′-biphenylene dicarbonyl and 3,4′-biphenylene dicarbonyl groups; and groups represented by the following general formula (II):

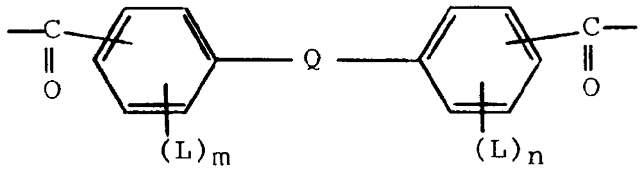

(II)

wherein Q is an oxy, sulphonyl, carbonyl, methylene, dichloromethylene, ethylidene, butylidene, 2,2′-propylidene, 1,1-phenylethylidene, or phenylenebis(2,2-propylidene) group, L is an alkyl group having 1 to 4 carbon atoms or a halogen atom and m and n are each integers of between 0 and 4.

Although preferred examples of the phenolic resin component include polyarylate, polyphenylene oxide, phenoxy, polysulphone and polyether sulphone resins, a polyarylate resin made from bisphenol A and benzenedicarboxylic acid is particularly preferable.

According to the present invention, the crystalline thermoplastic resin and the phenolic resin components are used in amounts of between 95 to 99.99% by weight and 5 to 0.1% by weight, respectively.

When the amount of the phenolic resin exceeds 5% by weight, the resulting composition will exhibit physical properties, such as crystallization behaviour and heat resistance (melting point), significantly different from those of the original polyester resin. For example, a film made of the resulting composition will unfavorably lose the characteristics inherent in polyester resins generally, such as gas barrier functions. On the contrary, when the amount of the phenolic resin is less than 0.01% by weight, little (if any) heat stability improvement is realized.

The compositions of the present invention exhibit excellent performance characteristics even in the absence of other additives. Particularly, the compositions of this invention exhibit improved heat stability to an extent equivalent to the heat stability attained by the addition of various conventional antioxidants. Accordingly, the absence of antioxidants (which generally tend to exude from the composition) is preferable since they will then not be present to bleed out of the compositions. However, the compositions of the present invention may further contain various additives in order to impart other performance characteristics thereto in dependence upon the desired end-use application, provided that the benefits achieved by the compositions of this invention are not hindered. The additives which may optionally be added include stabilizers, ultraviolet light absorbers, antistatic agents, flame retardants and auxiliary flame retardants, coloring agents, such as dyes and pigments, lubricating agents to improve fluidity and mold release properties, lubricants, crystallization accelerators (nucleating agents) and inorganic substances.

The resins compositions of the present invention may further contain a small amount of one or more thermoplastic resin as an auxiliary component, provided that the functional attributes of the present invention are not hindered. Any thermoplastic resin which is stable at high temperature may be used as an auxiliary component in the compositions of this invention. Examples of the auxiliary thermoplastic resin include one or more polyolefins, polyamides, ABS, polyalkyl acrylates, polyacetals, polyether imides and fluororesins.

The compositions according to the present invention may be prepared by any process known to those in art. The compositions are most easily prepared using conventional resin melt-blending techniques using conventional processing equipment. For example, the compositions of the invention may generally be prepared by mixing the necessary components with each other in a blender and then kneading and extruding the mixture to form pellets. Furthermore, a part or the entirety of the resin components may be pulverized prior to mixing to thereby attain more uniform blending of the components.

The molding resin compositions of the present invention are characterised by a significant decrease in the amount of decomposition products, for example, terephthalic acid which are solid at normal room temperature (e.g. 20°C) and which are released at elevated temperatures. To describe this characteristic quantitatively for the compositions according to the invention, the amount of the normally solid decomposition products generated by heating the composition at a molding temperature for 50 minutes is at most 0.10% by weight (based on the weight of the resin composition). For example, when the aliphatic dihydroxy compound constituting the polyester resin component is mainly composed of those having 3 to 8 carbon atoms (i.e. when the polyester resin is mainly composed of polybutylene terephthalate), the amount of the normally solid decomposition product generated by maintaining the composition in a molten state at 260°C for 50 minutes is 0.10% by weight or below. Furthermore, when the aliphatic dihydroxy compound constituting the polyester resin has about two carbon atoms (i.e., when the polyester resin in mainly composed of polyethylene terephthalate) the amount of the normally solid decomposition product generated by maintaining the composition in a molten state at 285°C for 50 minutes is 0.10% by weight or below, even though the melting point and the molding temperatures are higher. The amount of the normally solid decomposition product is determined by melting about 5 grams of a composition (pellets) on a hermetically closed hot plate at 260-285°C for 50 minutes, cooling the decomposition products (sublimate) generated from the molten polymers during melting so that it solidifies and then collecting

and weighing the product.

The processes for molding the resin composition of the invention into useful articles include any melt molding process. The effects of the present invention are more pronounced when the composition is extruded into films, sheets, monofilaments, fibers and/or solid or hollow tubular structures. The film or sheet may be produced by either an inflation method or a T-die method. Virtually no deposits are formed by the thermal decomposition of the resin composition on the slit, cooling roll and/or guide bar so that the resulting film or sheet have a consistent excellent surface appearance. The deposition-inhibiting effect attained by the addition of a relatively very small amount of the phenolic resin component according to the present invention is quite unexpected and forms a principal feature of the present invention.

As described above, the polyester resin molding composition of the present invention comprising a crystalline thermoplastic polyester resin component and a relatively very small amount of a phenolic resin component exhibits remarkably improved heat stability without exerting any adverse effect on the otherwise beneficial characteristics inherent in polyester resins generally. For example, when the composition is molded into a film or a sheet, the amount of normally solid thermal decomposition products, such as terephthalic acid, is so minimal that no solid thermal deposits are formed on the periphery of extrusion dies, cooling rolls and/or guide bars associated with the molding equipment used to form shaped articles of the polyester resin. Thus, the compositions of the present invention exhibit exceptional molding processability to high-quality molded articles having consistently excellent surface appearance.

The present invention will be described in more detail by reference to the following non-limiting Examples.

## EXAMPLES

The melt heat stability was evaluated by determining the amount of normally solid decomposition products generated during the melting according to the method described above (i.e., 50 minutes at 260°C in a case of using polybutylene terephthalate or 285°C in a case of using polyethylene terephthalate). That is, about 5 grams of a resin composition in pellet form was melted on a hermetically closed hot plate at the above target temperature for 50 minutes, while cooling the normally solid decomposition product generated from the molten polymers so as to solidify the same. The obtained normally solid decomposition product was collected and weighed to obtain the weight percentage of the decomposition product based on the weight of original resin composition. This weight percentage is shown in the following Table as the decomposition.

The surface gloss of molded articles was determined according to ASTM D 2457-70 at an angle of 60°C.

### Examples 1 to 5

A polybutylene terephthalate resin (PBT) having an intrinsic viscosity of 1.0 as the polyester resin component (A) was mixed with a polyarylate (B-1) made from bisphenol A and an isophthalic acid/terephthalic acid (1:1) mixture as the phenolic resin component (B) at ratios specified in Table 1. The obtained mixture was melted and extruded at 240°C to give a pelletized composition. The composition was then melt-extruded at 260°C through a T-die slit and quenched on a roll at room temperature to form a film. The solid deposit formed on the cooling roll during the extrusion was observed and the surface gloss of the film was also determined. The results are given in Table 1.

### Examples 6 to 8

Resin compositions were prepared in the same manner as that of Examples 1 to 5 except that poly-2,6-dimethyl-1,4-phenylene oxide (B-2), phenoxy resin (B-3) or polyester sulphone (B-4) was used as the phenolic resin component (B) which was compounded with polybutylene terephthalate as the polyester resin component (A). The degree of decomposition, the amount of solid deposit formed on the cooling roll during production of the film and the surface gloss of the film were also determined in the same manner as that of Examples 1 to 5. The results are given in Table 1.

### Comparative Examples 1 and 2

Compositions were prepared using polybutylene terephthalate as the polyester component (A) in a manner similar to Examples 1 to 8 except that either no phenolic resin component (B) was added or that polypropylene (PP) was added instead of the phenolic resin component (B). The degree of decomposition, the amount of solid deposit formed on the cooling roll during the production of a film and the surface gloss of a film were also determined in the same manner as that of Examples 1 to 5. The results are given in Table 1. In these Examples,

the white solid deposited on the roll was comprised essentially of terephthalic acid.

Examples 9 to 11

97.5 parts by weight of a polyethylene terephthalate resin (PET) having an intrinsic viscosity of 1.0 was mixed with polyarylate (B-1) made from bisphenol A and an isophthalic acid/terephthalic acid (1:1) mixture at at ratio specified in Table 2. The obtained mixture was melt-extruded at 2B0°C to give a pelletized composition. The composition was melted at 285°C to determine the degree of decomposition according to the methods described above. The composition was melt-extruded through a T-die slit at 285°C, and quenched on a roll at room temperature to give a film. The deposition of solid decomposition product on the roll was observed and the surface gloss of the film was determined. The results are given on Table 2.

Comparative Example 3

The procedure as used in Examples 9 to 11 was repeated except that no phenolic resin component (B) was used. The results are given in Table 2.

Table 1

| | | Ex. No. | | | | | | | | Comp. Ex. No. | |
|---|---|---|---|---|---|---|---|---|---|---|---|
| | | 1 | 2 | 3 | 4 | 5 | 6 | 7 | 8 | 1 | 2 |
| component (A) | (pts. by wt.) | PBT (96.5) | PBT (97.5) | PBT (99.0) | PBT (99.5) | PBT (99.9) | PBT (97.5) | PBT (97.5) | PBT (97.5) | PBT (100) | PBT (97.5) |
| component (B) | (pts. by wt.) | B-1 (3.5) | B-1 (2.5) | B-1 (1.0) | B-1 (0.5) | B-1 (0.1) | B-2 (2.5) | B-3 (2.5) | B-4 (2.5) | -- | -- |
| other component | (pts. by wt.) | -- | -- | -- | -- | -- | - | -- | -- | -- | PP (2.5) |
| degree of decomposition in the melting of pellets (260°C, 50 min.) (%) | | 0.01 | 0.02 | 0.02 | 0.02 | 0.03 | 0.02 | 0.04 | 0.03 | 0.14 | 0.18 |
| deposition on cooling roll | after 0.5 hour | not observed | not observed | not observed | not observed | very slight | not observed | very slight | not observed | significant white deposit | significant white deposit |
| | after 2 hours | not observed | not observed | not observed | not observed | slight | very slight | slight | very slight | significant white deposite | significant white deposite |
| gloss of film (after 2 hours) | | 71 | 70 | 68 | 68 | 62 | 67 | 58 | 60 | 40 | 29 |

Table 2

| | | Ex. No. | | | Comp. Ex. No. |
|---|---|---|---|---|---|
| | | 9 | 10 | 11 | 3 |
| component (A) (pts. by wt.) | | PET (97.5) | PET (99.0) | PET (99.5) | PET 100 |
| component (B) (pts. by wt.) | | B-1 (2.5) | B-1 (1.0) | B-1 (0.5) | -- |
| other component (pts. by wt.) | | -- | -- | -- | -- |
| degree of decomposition in the melting of pellets (285°C, 50 min.) (%) | | 0.01 | 0.02 | 0.02 | 0.15 |
| deposition on cooling rool | after 0.5 hour | not observed | not observed | not observed | significant white deposit |
| | after 2 hours | not observed | not observed | not observed | significant white deposit |
| gloss of film (after 2 hours) | | 80 | 76 | 75 | 50 |

## Claims

1. A heat-stable polyester resin molding composition which comprises:
   (A) between 95 and 99.99% by weight of a crystalline thermoplastic polyester resin which is the reaction product of an aromatic dicarboxylic acid or its ester-forming derivative and an aliphatic dihydroxy compound having 2 to 8 carbon atoms, and
   (B) 0.01% to 5% by weight of phenolic resin mainly comprised of a phenoxy skeleton having repeating units represented by the following general formula (I):

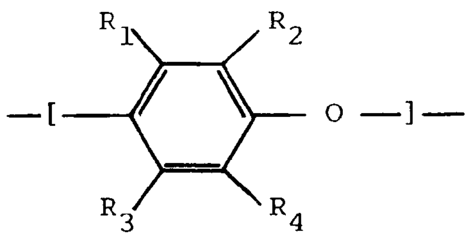

(I)

wherein $R_1$ to $R_4$, which may be the same or different, are each a hydrogen atom, an alkyl group or a halogen atom.

2. A polyester resin molding composition as claimed in claim 1, wherein the polyester resin component (A) consists essentially of polybutylene terephthalate.

3. A polyester resin molding composition as claimed in claim 2, wherein normally solid decomposition products in an amount no greater than 0.10% by weight of the composition are evolved when the composition is melted and maintained at a temperature of 260°C for 50 minutes is 0.10%.

4. A polyester resin molding composition as claimed in claim 1, wherein the polyester resin component (A) consists essentially of polyethylene terephthalate.

5. A polyester resin molding composition as claimed in claim 4, wherein normally solid decomposition products in an amount no greater than 0.10% by weight of the composition are evolved when the composition is melted and maintained at a temperature of 285°C for 50 minutes is 0.10%.

6. A polyester resin molding composition as claimed in any preceding claim, wherein the repeating units of the phenoxy skeleton of the phenolic resin (B) additionally contain one or more divalent organic groups X and/or Y at positions as indicated in the following general formula (Ia):

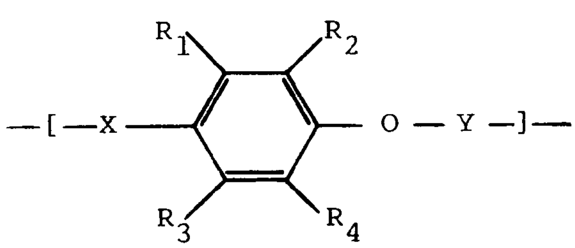

(Ia)

7. A polyester resin molding composition as claimed in claim 6, wherein the phenoxy skeleton contains X groups selected from oxy and oxyarylene groups.

8. A polyester resin molding composition as claimed in claim 6 or claim 7, wherein the phenoxy skeleton contains Y groups selected from arylenedicarbonyl, bisarylene sulphone, arylene sulphone, bisarylenecarbonyl, oxalyl or hydroxyalkylene groups.

9. A polyester resin molding composition as claimed in any preceding claim, wherein the phenolic resin component (B) is selected from polyarylate, polyphenylene oxide, phenoxy, polysulphone and polyether sulphone resins.

**10.** A polyester resin molding composition as claimed in claim 9, wherein the phenolic resin component (B) is a polyarylate resin made from bisphenol A and benzenedicarboxylic acid.

**11.** A molded melt-extruded article composed of a polyester resin molding as set forth in any preceding claim.

**12.** A molded melt-extruded article as claimed in claim 11, in the form of a film or sheet.